# EUROPEAN PATENT SPECIFICATION

(11) **EP 3 214 383 B1**
(45) Date of publication and mention of the grant of the patent: **15.01.2020**
(21) Application number: 15856117.5
(22) Date of filing: 29.09.2015
(51) Int. Cl.: F24F 11/36, F25B 1/00, F25B 49/02, F24F 11/89

(54) **AIR CONDITIONER**
KLIMAANLAGE
CLIMATISEUR

(30) Priority: 31.10.2014 JP 2014223394
(43) Date of publication of application: 06.09.2017
(73) Proprietor: Daikin Industries, Ltd., Osaka-shi, Osaka 530-8323 (JP)
(72) Inventor: IKAWA, Shinsuke, Osaka 530-8323 (JP); TASAKA, Akio, Osaka 530-8323 (JP); TADA, Hiroyuki, Osaka 530-8323 (JP); KITAMURA, Seiko, Osaka 530-8323 (JP); NAGAOKA, Shinji, Osaka 530-8323 (JP); MURATA, Katsunori, Osaka 530-8323 (JP)
(74) Representative: Hoffmann Eitle
(86) International application number: PCT/JP2015/077567
(87) International publication number: WO 2016/067817

(56) References cited:
- EP-A1- 3 029 397
- WO-A1-2013/145014
- WO-A1-2015/015617
- CN-A- 104 089 383
- JP-A- H0 875 588
- JP-A- 2000 230 761
- JP-A- 2003 172 565
- JP-A- 2003 344 337
- JP-A- 2009 093 467
- JP-A- 2014 081 160
- US-A1- 2002 178 738

## Description

### Technical Field

The present invention relates to an air conditioner using flammable refrigerant.

An air conditioner using flammable refrigerant, to which a refrigerant gas sensor is attached to an indoor unit of the air conditioner, has been known.

### Citation List

### Patent Literature

JP 2012 013348 (A).

EP 3 029 397 A1 is prior art under Art. 54(3) EPC (GL F-II 4.3) and discloses a heat source unit that includes a housing including a machine chamber incorporating a compressor and an expansion valve and having an air ventilation port allowing for ventilation with outside air and a heat exchange chamber incorporating a heat source side heat exchanger and an air-sending device configured to cause air to pass through the heat source side heat exchanger, a control box disposed in the housing at a position so that an airflow from the air-sending device passes through the control box, a refrigerant concentration detection unit disposed in the control box and configured to detect refrigerant concentration, and a control circuit disposed in the control box and configured to control the air-sending device so that a volume of air from the air-sending device to pass through the control box is maximum when refrigerant leakage is detected on a basis of a detection value of the refrigerant concentration detection unit. A purpose of the invention disclosed in JP H08 75588 A is to achieve a stable detection without any dipping and easily confirm ventilation state by forming a protruding part on the floor surface of a utility tunnel and a recess which is blocked by a member with a plurality of small holes on the protruding part and detecting oxygen concentration inside. A protruding part is formed on a floor surface of a utility tunnel, a recessed part as a gas leakage detection room is provided at the detection part, and the leakage of SF6 gas from a gas insulation bus is detected by an oxygen concentration measuring instrument inside. Therefore, even if water enters the utility tunnel, it does not flow into the recessed part, thus preventing the operation delay and failure of the measuring instrument. The contact time between the gas and the measuring instrument can be fully secured for a stable detection for a long time. Further, when the gas leaks, is ventilated, and a recovery operation is performed, the dilution of the gas inside the recessed part starts at a small hole of a blocking member after air inside the utility tunnel advances. Therefore, by confirming that the oxygen concentration inside the recessed part by a measuring instrument, the recovery operation can be started safely.

The problem to be solved by the invention disclosed in JP 2014 081160 A is to provide an air conditioner capable of promptly detecting refrigerant leakage even if a tiny or small amount of the refrigerant leaks. In an air conditioner, outdoor equipment and indoor equipment are connected by refrigerant pipelines (a refrigerant liquid pipe and a refrigerant gas pipe) and a refrigerant is circulated between the outdoor equipment and the indoor equipment to form a refrigeration cycle. A refrigerant leakage detection sensor for detecting a refrigerant gas is installed at a lower part of an area near a connection part which connects a refrigerant pipeline of the indoor equipment with the refrigerant pipelines. Preferably, the refrigerant leakage detection sensor is installed on any of a horizontal part or a recessed part of a component of the indoor equipment and a refrigerant receiving part attached to the indoor equipment.

### Summary of Invention

### Technical Problem

The refrigerant gas sensor is typically attached so that an opening for introducing leaked refrigerant gas into the inside faces upward. With this arrangement, however, a small amount of a different gas such as propane and pesticide, which is sucked from the outside of the air conditioner, may be erroneously recognized as refrigerant gas.

An object of the present invention is to provide an air conditioner in which a different gas sucked from the outside of the air conditioner is not erroneously recognized as refrigerant gas. Solution to Problem

According to the first aspect of the invention, an air conditioner uses flammable refrigerant and includes a refrigerant gas sensor inside the air conditioner, the refrigerant gas sensor including: a detecting element configured to detect leakage of refrigerant gas; and a casing member provided to surround the detecting element, the casing member having a first opening through which the refrigerant gas is introduced into an inside of the casing member, and the first opening being below the detecting element, wherein the refrigerant gas sensor includes a printed board having a lower surface to which the detecting element is fixed, and the casing member is a cylindrical member fixed to the lower surface of the printed board.

In this air conditioner, because the refrigerant gas sensor detects gas introduced into the casing member from below the casing member, it is extremely unlikely that the refrigerant gas sensor detects gas when an amount of the gas is small as in cases where the gas is propane or pesticide sucked from the outside of the air conditioner. It is therefore possible to prevent a different gas sucked from the outside of the air conditioner from being erroneously recognized as refrigerant gas.

Moreover, in this air conditioner, because the casing member is provided to surround the detecting element and is a cylindrical member fixed to the lower surface of the printed board, it is possible to ensure the prevention of the erroneous recognition of the different gas sucked from the outside of the air conditioner as the refrigerant gas and the prevention of the attachment of water or dust onto the detecting element.

According to the second aspect of the invention, the air conditioner of the first aspect further includes a surrounding member surrounding circumferences of the printed board and the casing member, a second opening being formed in a bottom surface of the surrounding member.

In this air conditioner, because the surrounding member is provided to cover the circumferences of the printed board and the casing member, it is possible to ensure the prevention of the erroneous recognition of the different gas sucked from the outside of the air conditioner as the refrigerant gas, the prevention of the attachment of water or dust onto the printed board, and the prevention of the attachment of water or dust onto the detecting element.

According to the third aspect of the invention, an air conditioner uses flammable refrigerant and includes a refrigerant gas sensor inside the air conditioner, the refrigerant gas sensor including: a detecting element configured to detect leakage of refrigerant gas; and a casing member provided to surround the detecting element, the casing member having a first opening through which the refrigerant gas is introduced into an inside of the casing member, and the first opening being below the detecting element, wherein the refrigerant gas sensor includes a printed board having a lower surface to which the detecting element is fixed, the casing member covering a circumference of the printed board.

In this air conditioner, because the casing member is provided to cover the circumference of the printed board, it is possible to ensure the prevention of the erroneous recognition of the different gas sucked from the outside of the air conditioner as the refrigerant gas, and the prevention of the attachment of water or dust onto the printed board and the detecting element.

### Advantageous Effects of Invention

As described above, the present invention provides the following advantageous effects.

According to the first aspect of the invention, because the refrigerant gas sensor detects gas introduced into the casing member from below the casing member, it is extremely unlikely that the refrigerant gas sensor detects gas when an amount of the gas is small as in cases where the gas is propane or pesticide sucked from the outside of the air conditioner. It is therefore possible to prevent a different gas sucked from the outside of the air conditioner from being erroneously recognized as refrigerant gas.

Moreover, because the casing member is provided to surround the detecting element and is a cylindrical member fixed to the lower surface of the printed board, it is possible to ensure the prevention of the erroneous recognition of the different gas sucked from the outside of the air conditioner as the refrigerant gas and the prevention of the attachment of water or dust onto the detecting element.

According to the second aspect of the invention, because the surrounding member is provided to cover the circumferences of the printed board and the casing member, it is possible to ensure the prevention of the erroneous recognition of the different gas sucked from the outside of the air conditioner as the refrigerant gas, the prevention of the attachment of water or dust onto the printed board, and the prevention of the attachment of water or dust onto the detecting element.

According to the third aspect of the invention, because the casing member is provided to cover the circumference of the printed board, it is possible to ensure the prevention of the erroneous recognition of the different gas sucked from the outside of the air conditioner as the refrigerant gas, and the prevention of the attachment of water or dust onto the printed board and the detecting element. Brief Description of Drawings

[FIG. 1] FIG. 1 is a circuit diagram showing a refrigerant circuit of an air conditioner of an embodiment of the present invention.
[FIG. 2] FIG. 2 is a perspective view of an indoor unit shown in FIG. 1.
[FIG. 3] FIG. 3 is a front view of the indoor unit.
[FIG. 4] FIG. 4 is a cross section taken along the IV-IV line in FIG. 3.
[FIG. 5] FIG. 5 is a cross section taken along the V-V line in FIG. 3.
[FIG. 6] FIG. 6 is a perspective view of the indoor unit from which a front grill and a front panel have been detached.
[FIG. 7] FIG. 7 is a front elevation of the indoor unit from which the front grill and the front panel have been detached.
[FIG. 8] FIG. 8A is a plan view of a drain pan shown in FIG. 6,
FIG. 8B is a front elevation of the drain pan, and FIG. 8C is a right profile of the drain pan.
[FIG. 9] FIG. 9 shows a control block of the indoor unit.
[FIG. 10] FIG. 10A is a perspective view showing a state that a lower housing is detached from a refrigerant gas sensor shown in FIG. 5, whereas FIG. 10B is a cross section of the refrigerant gas sensor.
[FIG. 11] FIG. 11A is a front enlarged view of a part where the refrigerant gas sensor is provided, FIG. 11B is identical with FIG. 11A except that a communication pipe is not shown, and FIG. 11C is identical with FIG. 11B except that the refrigerant gas sensor has been detached.
[FIG. 12] FIG. 12A is a cross section showing a state that the refrigerant gas sensor is attached to a sensor mounting portion, whereas FIG. 12B explains how the refrigerant gas sensor is detached.
[FIG. 13] FIG. 13 is a cross section of a refrigerant gas sensor of an indoor unit of an air conditioner according to a modification of the present invention.
[FIG. 14] FIG. 14A to FIG. 14C are drawings for illustrating the positional relationship between a detecting element and the casing opening. FIG. 14A shows a case where the casing opening is horizontally provided below the detecting element. FIG. 14B shows a case where the casing opening is tilted in a predetermined direction. FIG. 14C shows a case where the casing opening is tilted in a direction opposite to the predetermined direction.

### Description of Embodiments

The following will describe an air conditioner according to an embodiment of the present invention, with reference to drawings.

### [Overall Structure of Air Conditioner]

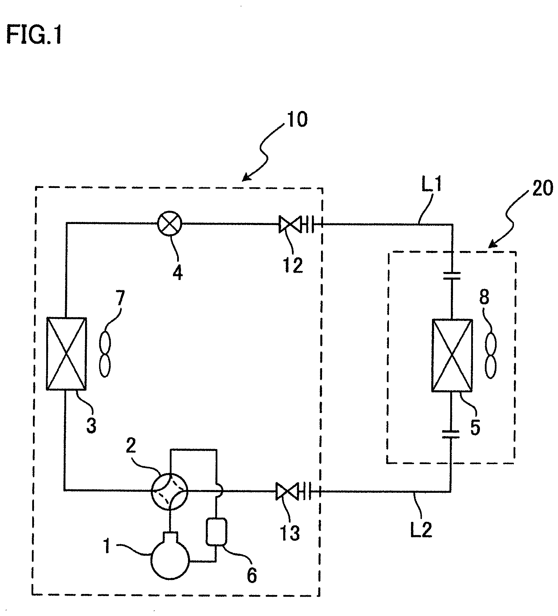

As shown in FIG. 1, an air conditioner of the present embodiment includes a compressor 1, a four-pass switching valve 2 having one end connected with the discharging side of the compressor 1, an outdoor heat exchanger 3 having one end connected with the other end of the four-pass switching valve 2, an electric expansion valve 4 having one end connected with the other end of the outdoor heat exchanger 3, an indoor heat exchanger 5 having one end connected with the other end of the electric expansion valve 4 via a stop valve 12 and a communication pipe L1, and an accumulator 6. The accumulator 6 has one end connected with the other end of the indoor heat exchanger 5 via a stop valve 13, a communication pipe L2, and the four-pass switching valve 2 and the other end connected with the sucking side of the compressor 1. The compressor 1, the four-pass switching valve 2, the outdoor heat exchanger 3, the electric expansion valve 4, the indoor heat exchanger 5, and the accumulator 6 form a refrigerant circuit.

In addition to the above, the air conditioner includes an outdoor fan 7 provided in the vicinity of the outdoor heat exchanger 3, and an indoor fan 8 provided in the vicinity of the indoor heat exchanger 5. The compressor 1, the four-pass switching valve 2, the outdoor heat exchanger 3, the electric expansion valve 4, the accumulator 6, and the outdoor fan 7 are provided in an outdoor unit 10, whereas the indoor heat exchanger 5 and the indoor fan 8 are provided in an indoor unit 20.

In this air conditioner, in a warming operation, as the four-pass switching valve 2 is switched to a position indicated by full lines and the compressor 1 is activated, high-pressure refrigerant discharged from the compressor 1 enters the indoor heat exchanger 5 through the four-pass switching valve 2. The refrigerant condensed in the indoor heat exchanger 5 is depressurized in the electric expansion valve 4 and then enters the outdoor heat exchanger 3. The refrigerant evaporated in the outdoor heat exchanger 3 returns to the sucking side of the compressor 1 via the four-pass switching valve 2 and the accumulator 6. In this way, a refrigerating cycle is formed such that the refrigerant circulates in the refrigerant circuit constituted by the compressor 1, the indoor heat exchanger 5, the electric expansion valve 4, the outdoor heat exchanger 3, and the accumulator 6. The room is warmed in such a way that room air is circulated by the indoor fan 8 through the indoor heat exchanger 5.

In the meanwhile, in a cooling operation (including a dehumidification operation), as the four-pass cooling operation 2 is switched to a position indicated by dotted lines and the compressor 1 is activated, high-pressure refrigerant discharged from the compressor 1 enters the outdoor heat exchanger 3 through the four-pass switching valve 2. The refrigerant condensed in the outdoor heat exchanger 3 is depressurized in the electric expansion valve 4 and then enters the indoor heat exchanger 5. The refrigerant evaporated in the indoor heat exchanger 5 returns to the sucking side of the compressor 1 via the four-pass switching valve 2 and the accumulator 6. In this way, a refrigerating cycle is formed such that the refrigerant circulates through the compressor 1, the outdoor heat exchanger 3, the electric expansion valve 4, the indoor heat exchanger 5, and the accumulator 6 in this order. The room is cooled in such a way that room air is circulated by the indoor fan 8 through the indoor heat exchanger 5.

This air conditioner uses flammable refrigerant. In the present invention, the term "flammable refrigerant" encompasses not only flammable refrigerant but also mildly flammable refrigerant. While the air conditioner uses R32 which is mildly flammable refrigerant, the air conditioner may use R290, for example. The air conditioner uses refrigerant having a higher specific gravity than air.

### [Indoor Unit]

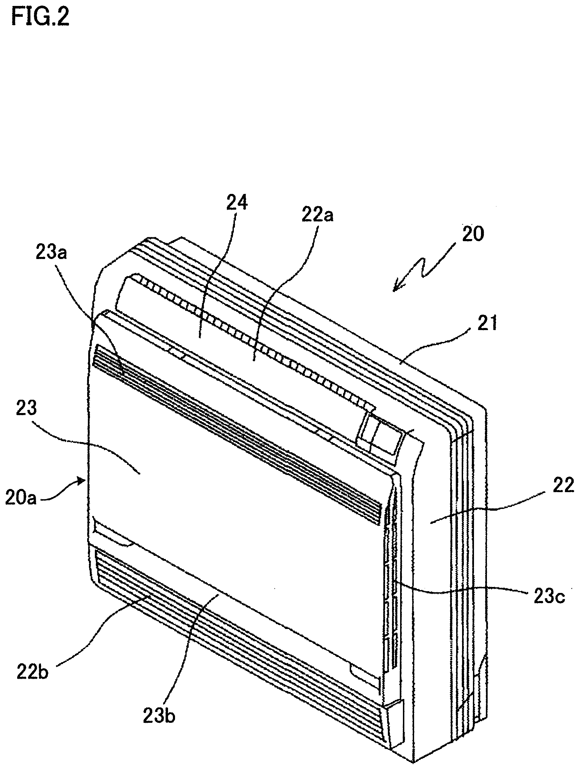

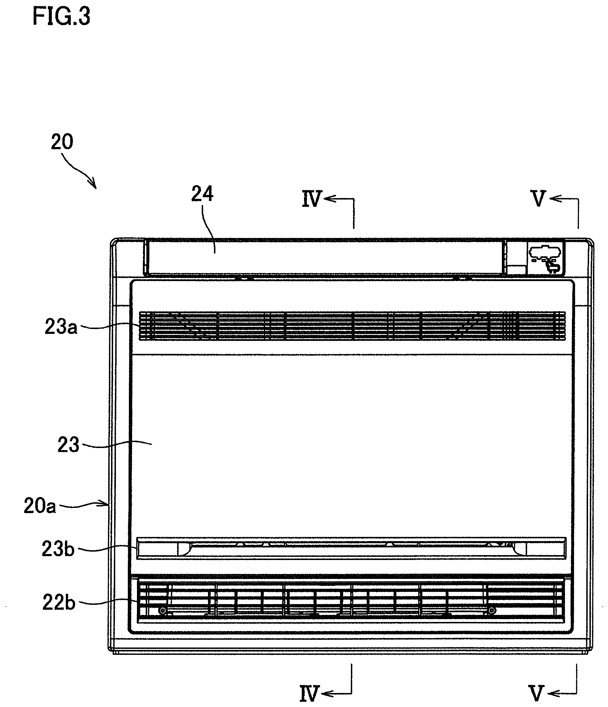

As shown in FIG. 2 to FIG. 4, the indoor unit 20 is a floor-mounted indoor unit and includes a bottom frame 21 which is substantially rectangular in shape, the back surface side of the bottom frame 21 being attached to a wall of the room, a front grill 22 which is attached to the front surface side of the bottom frame 21 and has a substantially rectangular opening 22c in the front surface, and a front panel 23 attached to cover the opening 22c of the front grill 22. The bottom frame 21, the front grill 22, and the front panel 23 form a casing 20a.

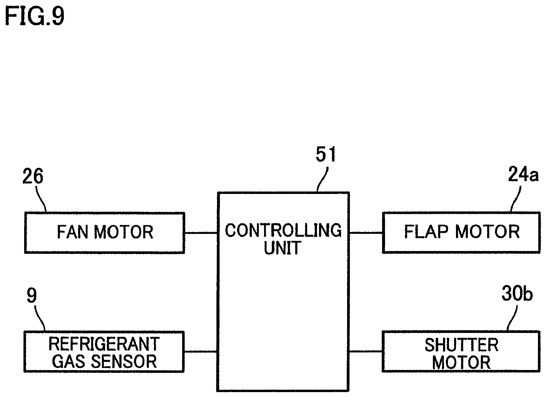

An upper outlet port 22a is formed at an upper part of the front grill 22, whereas a lower outlet port 22b is formed at a lower part of the front grill 22. In an upper outlet path P1 communicating with the upper outlet port 22a, a vertical flap 24 is provided to change, in the up-down direction, the direction of the air flow blown out from the upper outlet port 22a. The vertical flap 24 is connected with a flap motor 24a (see FIG. 9). The vertical flap 24 is rotatable about the rotational axis along the horizontal direction, by the driving of the flap motor 24a. During the cooling operation or the warming operation, this vertical flap 24 rotates to a position where cool wind or warm wind is blown out forward and obliquely upward from the upper outlet port 22a, and stops at this position. During the operation stop, the upper outlet port 22a is closed as shown in FIG. 2.

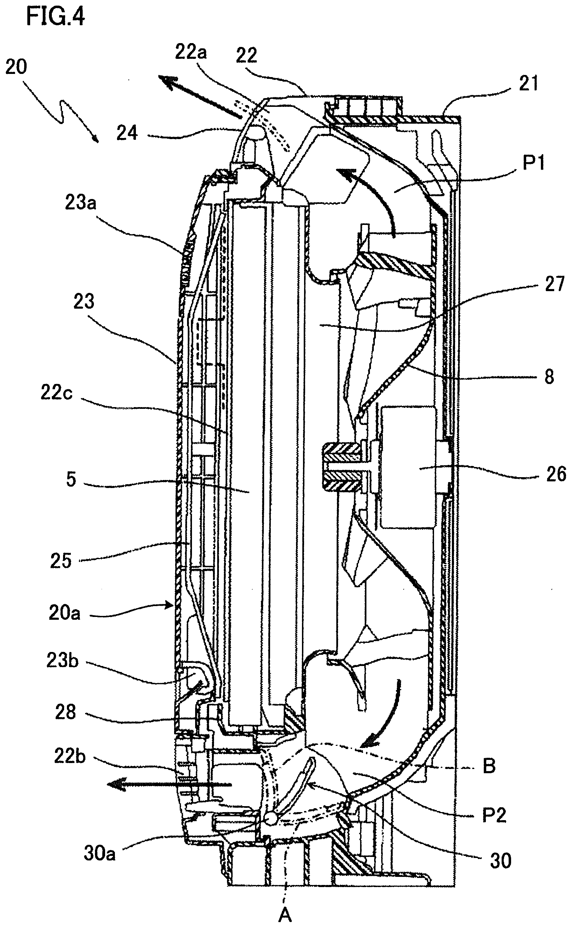

In the meanwhile, in a lower outlet path P2 communicating with the lower outlet port 22b, a shutter 30 configured to open and close the lower outlet port 22b and a horizontal flap 31 configured to change, in the left-right direction, the direction of the air flow blown out from the lower outlet port 22b are provided. The shutter 30 is connected with a shutter motor 30b. As shown in FIG. 4, the shutter 30 rotates about the axis 30a extending along the horizontal direction, by the driving of the shutter motor 30b. This shutter 30 stops at a position A indicated by a one dot chain line to open the lower outlet port 22b, and stops at a position B indicated by a one dot chain line to close the lower outlet port 22b. The direction of the horizontal flap 31 is manually adjusted.

An upper inlet port 23a is formed at an upper part of the front panel 23, a lower inlet port 23b is formed at a lower part of the front panel 23, and side inlet ports 23c (only the right one is shown in FIG. 2) are formed through side faces of the front panel 23.

As shown in FIG. 4, a fan motor 26 is fixed at a substantial center of the bottom frame 21. The indoor fan 8 connected with the axis of the fan motor 26 is disposed in the bottom frame 21 so that the axis of the fan extends along the front-back direction. The indoor fan 8 is a turbofan which sucks air from the front surface side and blows the air radially outward with respect to the axis. The bottom frame 21 includes a bell-mouth 27 formed on the front surface side of the indoor fan 8. The indoor heat exchanger 5 is provided on the front surface side of the bell-mouth 27, and the front grill 22 is attached to the front surface side of the indoor heat exchanger 5. Furthermore, the front panel 23 is attached to the front surface side of the front grill 22. To the opening 22c of the front grill 22, a filter 25 is attached.

As the driving of the air conditioner starts, the fan motor 26 is driven so that the indoor fan 8 rotates. As the indoor fan 8 rotates, room air is sucked into the indoor unit 20 through the upper inlet port 23a, the lower inlet port 23b, and the side inlet ports 23c. The room air sucked into the indoor unit 20 is subjected to the heat exchange by the indoor heat exchanger 5, and is then blown out to the room through the upper outlet port 22a and the lower outlet port 22b. When the lower outlet port 22b is closed by the shutter 30, the room air sucked into the indoor unit 20 is blown out only through the upper outlet port 22a.

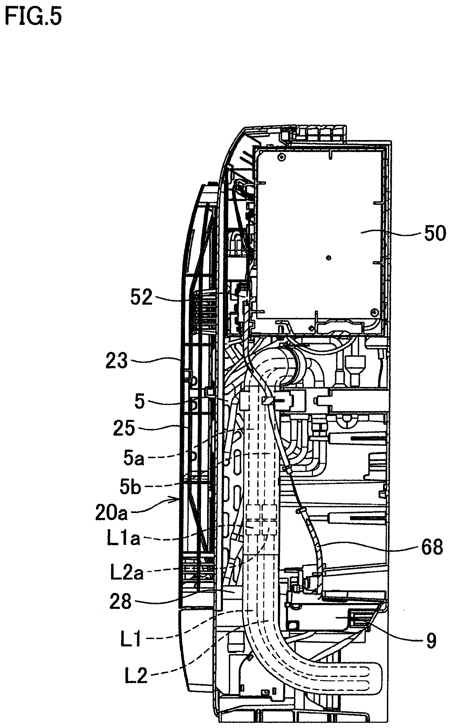

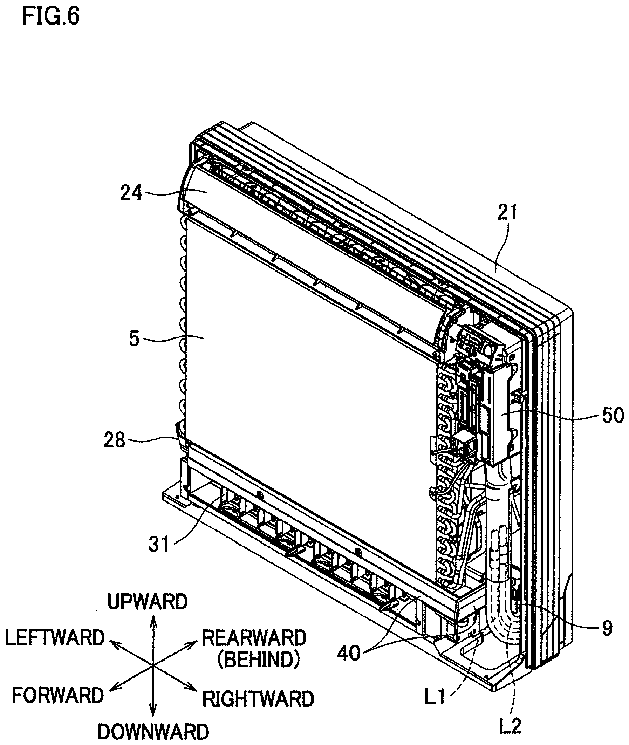

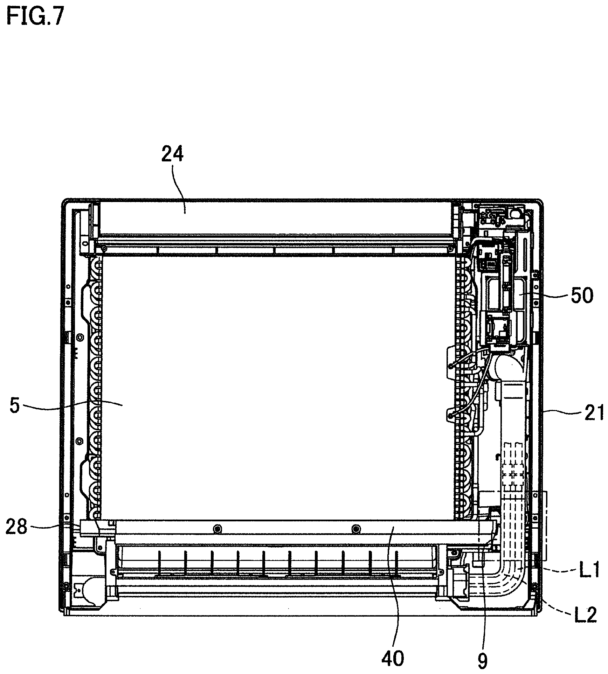

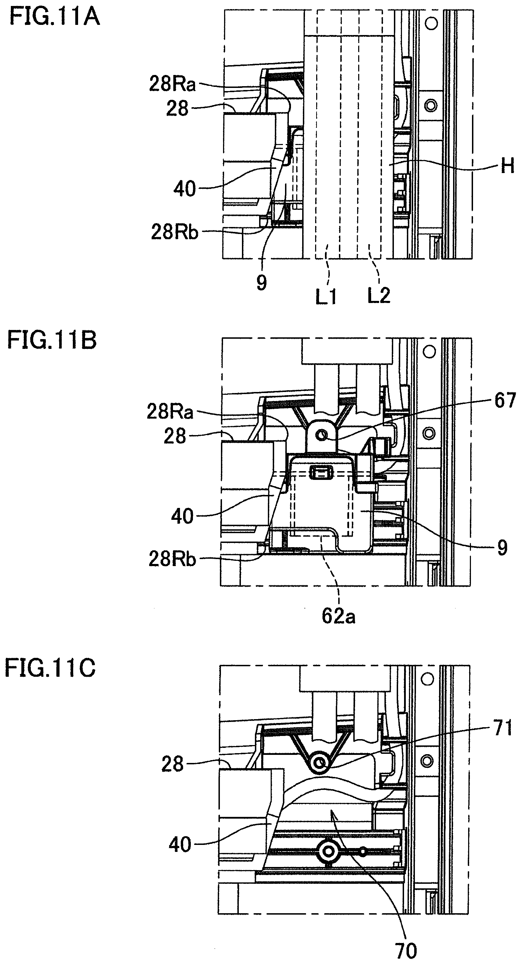

As shown in FIG. 5 to FIG. 7, a drain pan 28 is provided below the indoor heat exchanger 5 to receive and drain the condensed water from the air, which is generated on the indoor heat exchanger 5. This drain pan 28 is surrounded by a heat insulating material 40. Furthermore, an electronic component box 50 is provided to the right of (outside in the longitudinal direction) and above the indoor heat exchanger 5. Below the electronic component box 50, a sensor mounting portion 70 (see FIG. 11C) is provided. To this sensor mounting portion 70, a refrigerant gas sensor 9 is detachably attached. This refrigerant gas sensor 9 is provided to the right of (outside in the longitudinal direction) the indoor heat exchanger 5 and the drain pan 28. As shown in FIG. 5, the electronic component box 50 includes a harness connection portion 52 with which a harness 68 extending from the refrigerant gas sensor 9 is connected. As shown in FIG. 5, in the longitudinal direction (left-right direction) of the indoor heat exchanger 5, the harness 68 is provided on the outer side of the indoor heat exchanger 5 as compared to refrigerant pipes 5a and 5b which extend from the indoor heat exchanger 5 and which are connected with communication pipes L1 and L2.

### (Drain Pan)

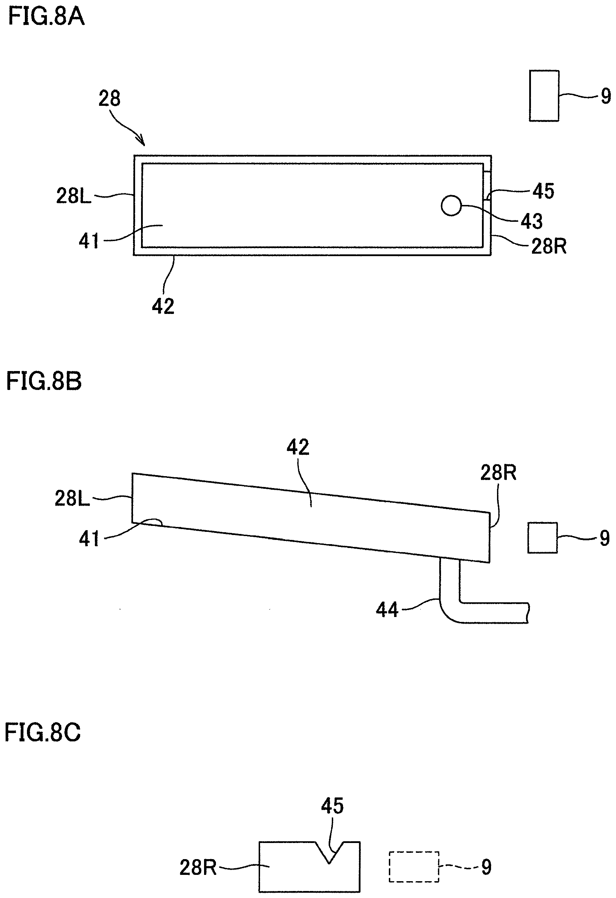

As shown in FIG. 8A, the drain pan 28 includes a bottom portion 41 and a peripheral wall portion 42 extending upward from the entire outline of the bottom portion 41. This drain pan 28 has a discharge hole 43 at around the right end 28R in the longitudinal direction (i.e., an end portion on the refrigerant gas sensor side) to discharge condensed water. The discharge hole 43 is connected with a drain hose 44. This drain hose 44 extends to reach the outside of the room together with the communication pipes L1 and L2. As shown in FIG. 8B, the bottom portion 41 of the drain pan 28 is tilted downward in the direction from the left end 28L to the right end 28R (i.e., tilted downward toward the refrigerant gas sensor in the longitudinal direction). The condensed water having fallen onto the drain pan 28 from the indoor heat exchanger 5 flows on the drain pan 28 from the left end 28L side to the right end 28R side and is then discharged from the discharge hole 43. In FIG. 8B, the inclination of the bottom portion 41 of the drain pan 28 is exaggerated for easy understanding. Furthermore, as shown in FIG. 8C, a notch 45 is formed in the peripheral wall portion 42 of the drain pan 28 on the refrigerant gas sensor 9 side. To be more specific, the notch 45 is formed in a side face on the right end 28R side of the drain pan 28 (i.e. , the right side face of the peripheral wall portion 42). The phrase "the peripheral wall portion on the refrigerant gas sensor side" indicates a part of the peripheral wall portion 42, which is on the refrigerant gas sensor 9 side of the center in the longitudinal direction of the indoor heat exchanger 5. The notch is therefore not always required to be formed in the right side face of the peripheral wall portion 42, and may be formed in any part of the peripheral wall portion 42, on condition that the part is on the refrigerant gas sensor 9 side.

In this air conditioner, when refrigerant gas accidentally leaks out due to a reason such as the breakage of a refrigerant pipe in the indoor heat exchanger 5, the refrigerant gas having the higher specific gravity than air flows downward and reaches the drain pan 28. The refrigerant gas having reached the drain pan 28 flows from the left end 28L side toward the right end 28R side along the inclination of the drain pan 28. On this account, the refrigerant gas having reached the drain pan 28 tends to overflow the drain pan 28 on the refrigerant gas sensor 9 side in the longitudinal direction. In particular, the refrigerant gas tends to overflow through the notch 45 formed in the peripheral wall portion 42. The overflow refrigerant gas stagnates at the bottom of the indoor unit 20, and leaks out of the indoor unit 20.

### (Electronic Component Box)

The electronic component box 50 houses a controlling unit 51 therein for controlling components required for operations such as the cooling and warming operations of the air conditioner. As shown in FIG. 9, this controlling unit 51 is connected with the fan motor 26, the refrigerant gas sensor 9, the flap motor 24a, and the shutter motor 30b, controls the indoor fan 8, the vertical flap 24, and the shutter 30, and determines whether refrigerant leakage occurs based on a result of detection of the refrigerant gas by the refrigerant gas sensor 9.

### (Refrigerant Gas Sensor)

The refrigerant gas sensor 9 is a sensor configured to detect leaked refrigerant gas, and is provided to be flush with or lower than the drain pan 28 as shown in FIG. 5. The refrigerant gas sensor 9 is provided to the right of (outside in the longitudinal direction of) the drain pan 28 and to be rearward of (i.e., behind) the drain pan 28 and the indoor heat exchanger 5.

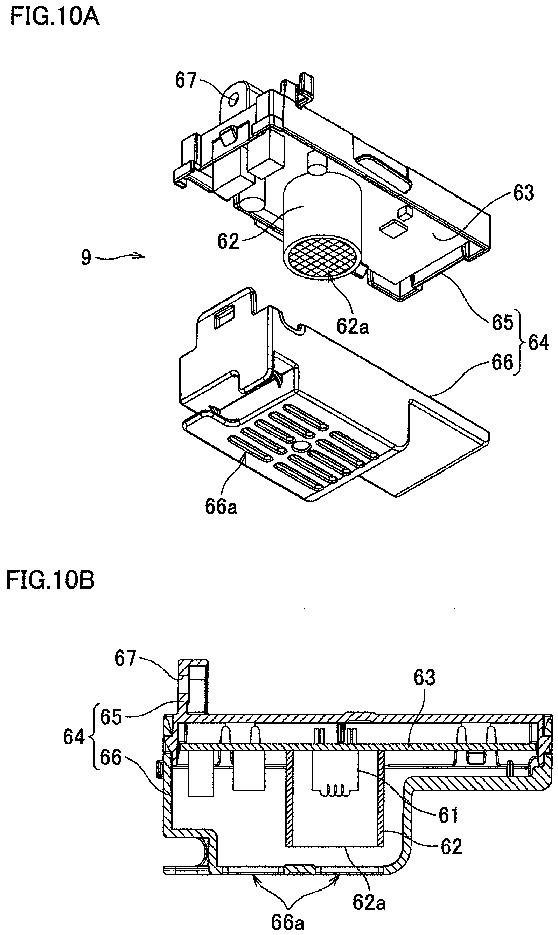

As shown in FIG. 10A and 10B, this refrigerant gas sensor 9 includes a detecting element 61 configured to detect refrigerant gas, a hollow (e.g., cylindrical) casing member 62 provided to surround the detecting element 61, a printed board 63 having a lower surface to which the detecting element 61 and the casing member 62 are fixed, and a housing (surrounding member) 64 surrounding the circumference of the printed board 63. This casing member 62 is provided in the vicinity of the circumference of the detecting element 61. The distance between the detecting element 61 and the inner circumferential surface of the casing member 62 is very short.

The casing member 62 has, at its lower end, a casing opening (first opening) 62a which is provided to introduce leaked refrigerant gas into the casing member 62. To the casing opening 62a, for example, a meshed filter is attached. As shown in FIG. 10B, the casing opening 62a is formed to be along the horizontal plane, and the entirety of the casing opening 62a is provided below the detecting element 61. The upper end of the casing member 62 is closed by the printed board 63 to prevent refrigerant gas from being introduced into the casing member 62 through an opening other than the casing opening 62a. The housing (surrounding member) 64 includes a first housing 65 covering the circumference and the top of the printed board 63 and a second housing 66 covering the circumference and the bottom of the printed board 63 and the circumference of the casing member 62. In the bottom surface of the second housing 66, slits (second openings) 66a are formed. In this refrigerant gas sensor 9, refrigerant gas is taken into the housing 64 only through the slits 66a. In the first housing 65, a hole 67 is formed to receive a later-described screw (fixing member) S.

The phrase "the refrigerant gas sensor is provided to be flush with the drain pan" indicates that, as shown in FIG. 11B, the casing opening 62a of the refrigerant gas sensor 9 is provided between the upper end 28Ra and the lower end 28Rb of the right end 28R of the drain pan 28. The phrase "the refrigerant gas sensor is provided to be lower than the drain pan" indicates that the casing opening 62a of the refrigerant gas sensor 9 is provided below the lower end 28Rb of the right end 28R of the drain pan 28.

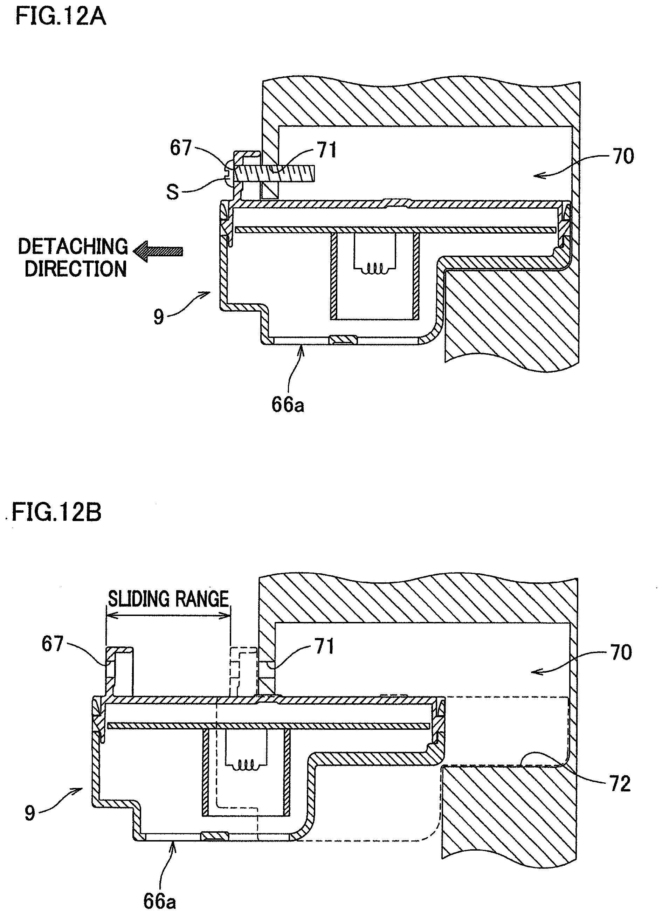

As shown in FIG. 11 and FIG. 12, the sensor mounting portion 70 has: a screw hole (sensor fixing portion) 71 for attaching the refrigerant gas sensor 9; and a housing portion 72 in which a rear end portion of the refrigerant gas sensor 9 is housed. As shown in FIG. 12A, when the refrigerant gas sensor 9 is attached to the sensor mounting portion 70, the rear end portion of the refrigerant gas sensor 9 is housed in the housing portion 72 and the screw (fixing member) S inserted into the hole 67 of the refrigerant gas sensor 9 is screwed into the screw hole (sensor fixing portion) 71.

In regard to this refrigerant gas sensor 9, to detach the refrigerant gas sensor 9 from the sensor mounting portion 70, to begin with, the screw (fixing member) S is taken out from the screw hole (sensor fixing portion) 71 in the forward direction (the direction in which the fixing member is taken out (see FIG. 12A), and then the refrigerant gas sensor 9 is slid in the forward direction (the detaching direction of the refrigerant gas sensor (see FIG. 12A) relative to the sensor mounting portion 70, for a predetermined distance (predetermined sliding range) . In this way, the refrigerant gas sensor 9 is detached.

In this indoor unit 20, as shown in FIG. 5 to FIG. 7 and FIG. 11A, when the front grill 22 and the front panel 23 (casing 20a) provided on the side toward which the refrigerant gas sensor 9 is detached are open (detached), the communication pipes (regulating members) L1 and L2 are provided on the side toward which the refrigerant gas sensor 9 is detached, in order to regulate the detachment of the refrigerant gas sensor 9. When a service technician, a user, or the like detaches the front grill 22 and the front panel 23 (casing 20a) and performs maintenance of the indoor unit 20, the communication pipes L1 and L2 do not allow the refrigerant gas sensor 9 to be easily detached, when he/she erroneously tries to detach the refrigerant gas sensor 9.

The communication pipes L1 and L2 are communication pipes (refrigerant pipes) connected with refrigerant pipes 5a and 5b extending from the indoor heat exchanger 5. The communication pipes L1 and L2 are provided below the indoor unit 20, behind the indoor unit 20, and on the outdoor unit 10 side. The two communication pipes L1 and L2 are covered with, for example, a single heat insulating material H. As such, the two communication pipes L1 and L2 are covered with the heat insulating material H. On this account, as compared to cases where the communication pipes L1 and L2 are naked, a hand or a screwdriver is less likely to make contact with the refrigerant gas sensor 9 and the screw S. It is therefore further difficult to detach the refrigerant gas sensor 9. The same effect is obtained when the two communication pipes are covered with different heat insulating materials, respectively.

As shown in FIG. 5, connecting portions L1a and L2a of the communication pipes L1 and L2, which are connected with the refrigerant pipes 5a and 5b, are provided above the refrigerant gas sensor 9. A service technician, a user, or the like is allowed to detach the refrigerant gas sensor 9 only after the refrigerant flowing in the refrigerant circuit is removed and the communication pipes L1 and L2 are detached from the refrigerant pipes 5a and 5b.

The phrase "the detaching direction of the refrigerant gas sensor (the direction in which the refrigerant gas sensor is detached)" indicates the direction in which the fixing member is detached, in cases where the refrigerant gas sensor is fixed to the sensor fixing portion via the fixing member. On this account, "the detaching direction of the refrigerant gas sensor (the direction in which the refrigerant gas sensor is detached)" indicates the direction in which the fixing member is detached, even if the refrigerant gas sensor drops down when the fixing member fixed to the sensor fixing portion is detached. In cases where the refrigerant gas sensor is slid in the detaching direction of the refrigerant gas sensor, the phrase "the detaching direction of the refrigerant gas sensor (the direction in which the refrigerant gas sensor is detached)" indicates the sliding direction. In cases where the refrigerant gas sensor is fixed to the sensor fixing portion via the fixing member and the refrigerant gas sensor is slid in the detaching direction of the refrigerant gas sensor as in the present embodiment, the phrase "the detaching direction of the refrigerant gas sensor (the direction in which the refrigerant gas sensor is detached) " indicates the direction in which the fixing member is taken out and the sliding direction of the refrigerant gas sensor. In the present embodiment, "the detaching direction of the refrigerant gas sensor (the direction in which the refrigerant gas sensor is detached)" is the forward direction because the direction in which fixing member is taken out and the sliding direction of the refrigerant gas sensor are both the forward direction. When the direction in which the fixing member is taken out is different from the sliding direction of the refrigerant gas sensor, these two directions are "the detaching directions of the refrigerant gas sensor (the direction in which the refrigerant gas sensor is detached)".

Because the "regulating member" is configured to regulate the detachment of the refrigerant gas sensor, the regulating member is required to be provided at a position where the regulation of the detachment of the refrigerant gas sensor is possible. In the present embodiment, as shown in FIG. 11A, the communication pipes L1 and L2 which are the regulating members overlap the refrigerant gas sensor 9 in a front view and are in the sliding range of the refrigerant gas sensor 9 (see FIG. 12B) when the refrigerant gas sensor 9 is attached to the sensor mounting portion 70. Furthermore, when the screw S is screwed into the screw hole 71, the communication pipes L1 and L2 are positioned to obstruct the screw S from being taken out by a screwdriver, i.e. , are provided at around positions overlapping the screw S in a front view, and the distance between the screw S and each of the communication pipes L1 and L2 is arranged to be equal to or shorter than the length of the screwdriver.

### [Characteristics of Air Conditioner of Present Embodiment]

The air conditioner of the present embodiment has the following characteristics. In this air conditioner, because the refrigerant gas sensor 9 detects gas introduced into the casing member 62 from below the casing member 62, it is extremely unlikely that the refrigerant gas sensor 9 detects gas when an amount of the gas is small as in cases where the gas is propane or pesticide sucked from the outside (e.g., the air-conditioned space) of the air conditioner. It is therefore possible to prevent a different gas sucked from the outside of the air conditioner from being erroneously recognized as refrigerant gas. Furthermore, because in this air conditioner the casing opening 62a faces downward, it is possible to prevent the deterioration of the detection accuracy of the refrigerant gas sensor 9 due to dust attached to the casing opening 62a. Furthermore, in this air conditioner, when water is splashed onto the refrigerant gas sensor 9, e.g., when a user or the like erroneously puts water into the indoor unit 20 or when condensed water spills over or is splashed from the drain pan 28, because the casing opening 62a faces downward, the water is less likely to attach to the detecting element 61, and hence malfunction of the refrigerant gas sensor 9 is avoided.

In addition to the above, in the air conditioner of the present embodiment, because the casing member 62 is provided to surround the detecting element 61 and is a cylindrical member fixed to the lower surface of the printed board 63, it is possible to ensure the prevention of the erroneous recognition of the different gas sucked from the outside of the air conditioner as the refrigerant gas and the prevention of the attachment of water or dust onto the detecting element 61.

In addition to the above, in the air conditioner of the present embodiment, because the housing (surrounding member) 64 is provided to cover the circumferences of the printed board 63 and the casing member 62, it is possible to ensure the prevention of the erroneous recognition of the different gas sucked from the outside of the air conditioner as the refrigerant gas, the prevention of the attachment of water or dust onto the printed board 63, and the prevention of the attachment of water or dust onto the detecting element 61.

Thus, the embodiment of the present invention is described hereinabove. However, the specific structure of the present invention shall not be interpreted as to be limited to the above described embodiments. The scope of the present invention is defined not by the above embodiments but by claims set forth below, and shall encompass the equivalents in the meaning of the claims and every modification within the scope of the claims.

### [Modification]

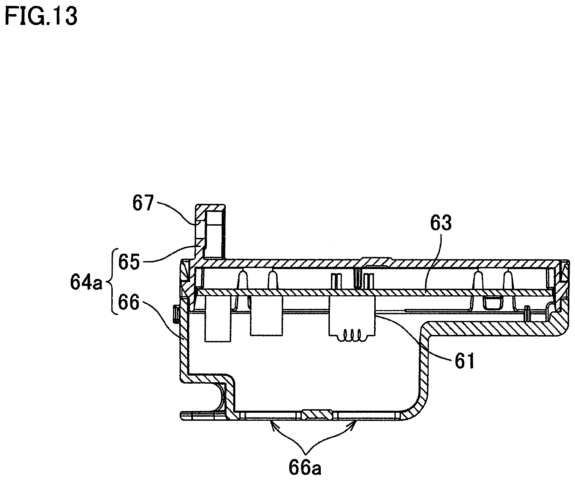

The following will describe an indoor unit of an air conditioner of a modification of the present invention with reference to FIG. 13. In regard to the refrigerant gas sensor 9 attached to the indoor unit 20 of the air conditioner of the embodiment above, the "casing member" of the present invention is a cylindrical member (casing member 62) fixed to the lower surface of the printed board 63, and the housing (surrounding member) 64 is provided to surround the circumferences of the printed board 63 and the casing member 62. As shown in FIG. 13, the indoor unit of the air conditioner of the modification is identical with the air conditioner of the embodiment above except that a cylindrical member fixed to the lower surface of the printed board 63 is not included, and a housing 64a covering the circumference of the printed board 63 is the "casing member" of the present invention. In FIG. 13, the same reference symbols are used for members identical with those of the embodiment above.

In this air conditioner, because the housing 64a (the "casing member" of the present invention) is provided to cover the circumference of the printed board 63, it is possible to ensure the prevention of the erroneous recognition of the different gas sucked from the outside of the air conditioner (e.g., the air-conditioned space) as the refrigerant gas, and the prevention of the attachment of water or dust onto the printed board 63 and the detecting element 61.

### [Other Modifications]

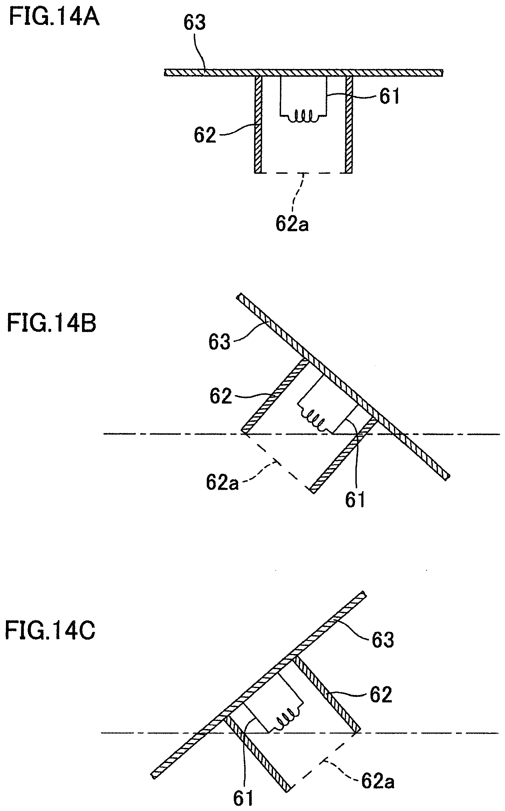

In the embodiment above, the casing opening (first opening) 62a for introducing refrigerant gas into the inside is horizontally provided below the detecting element 61, i.e., as shown in FIG. 14A, the casing opening 62a faces vertically downward. Alternatively, as shown in FIG. 14B and FIG. 14C, the casing opening 62a may face obliquely downward on condition that the entirety of the casing opening 62a is below the detecting element 61.

While in the embodiment above the housing (surrounding member) 64 is provided to surround the circumferences of the printed board 63 and the casing member 62 and the slits (second openings) 66a are formed in the bottom surface of the housing (surrounding member) 64, a second opening may be formed in a part different from the bottom portion of the surrounding member. Furthermore, the surrounding member may not be provided.

While in the embodiment above the refrigerant gas sensor 9 includes the printed board 63, the refrigerant gas sensor may be differently arranged.

While in the embodiment above the indoor unit is a floor-mounted indoor unit, the indoor unit may not be floor-mounted, and may be wall-mounted.

While in the embodiment above the refrigerant gas sensor 9 is provided inside the indoor unit 20, the refrigerant gas sensor may be provided, for example, inside the outdoor unit.

### Industrial Applicability

The present invention makes it possible to prevent a different gas sucked from the outside of the air conditioner from being erroneously recognized as refrigerant gas.

### Reference Signs List

- 9:: refrigerant gas sensor
- 61:: detecting element
- 62:: casing member
- 62a:: casing opening (first opening)
- 63:: printed board
- 64:: housing (surrounding member)
- 64a: housing (casing member)
- 66a:: slit (second opening)

## Claims

1. An air conditioner which uses flammable refrigerant and includes a refrigerant gas sensor (9) inside the air conditioner,
the refrigerant gas sensor (9) including:
a detecting element (61) configured to detect leakage of refrigerant gas; and
a casing member (62) provided to surround the detecting element (61),
the casing member (62) having a first opening (62a) through which the refrigerant gas is introduced into an inside of the casing member (62), and
the first opening (62a) being below the detecting element (61), **characterized in that**
the refrigerant gas sensor (9) includes a printed board (63) having a lower surface to which the detecting element (61) is fixed, and the casing member (62) is a cylindrical member fixed to the lower surface of the printed board (63).

2. The air conditioner according to claim 1, further comprising a surrounding member (64) surrounding circumferences of the printed board (63) and the casing member (62),
a second opening being (66a) formed in a bottom surface of the surrounding member (64).

3. An air conditioner which uses flammable refrigerant and includes a refrigerant gas sensor (9) inside the air conditioner,
the refrigerant gas sensor (9) including:
a detecting element (61) configured to detect leakage of refrigerant gas; and
a casing member (64a) provided to surround the detecting element (61),
the casing member (64a) having a first opening (62a) through which the refrigerant gas is introduced into an inside of the casing member (64a), and
the first opening (62a) being below the detecting element (61), **characterized in that**
the refrigerant gas sensor (9) includes a printed board (63) having a lower surface to which the detecting element (61) is fixed,
the casing member (64a) covering a circumference of the printed board (63).

## Patentansprüche

1. Klimaanlage, die brennbares Kältemittel verwendet und einen Kältegassensor (9) im Inneren der Klimaanlage enthält,
der Kältegassensor (9) enthaltend:
ein Erfassungselement (61), das ausgebildet ist, Lecken von Kältegas zu erfassen; und
ein Gehäuseelement (62), das bereitgestellt ist, um das Erfassungselement (61) zu umgeben,
wobei das Gehäuseelement (62) eine erste Öffnung (62a) aufweist, durch die das Kältegas in eine Innenseite des Gehäuseelements (62) eingeleitet wird, und
die erste Öffnung (62a) sich unter dem Erfassungselement (61) befindet,
**dadurch gekennzeichnet, dass**
der Kältegassensor (9) eine Leiterplatte (63) aufweisend eine untere Oberfläche, an der das Erfassungselement (61) befestigt ist, enthält und das Gehäuseelement (62) ein zylindrisches Element ist, das an der unteren Oberfläche der Leiterplatte (63) befestigt ist.

2. Klimaanlage nach Anspruch 1, weiter umfassend ein Umschließungselement (64), das Umfänge der Leiterplatte (63) und des Gehäuseelements (62) umschließt,
wobei eine zweite Öffnung (66a) in einer Bodenfläche des Umschließungselements (64) gebildet ist.

3. Klimaanlage, die brennbares Kältemittel verwendet und einen Kältegassensor (9) im Inneren der Klimaanlage enthält,
der Kältegassensor (9) enthaltend:
ein Erfassungselement (61), das ausgebildet ist, Lecken von Kältegas zu erfassen; und
ein Gehäuseelement (64a), das bereitgestellt ist, um das Erfassungselement (61) zu umgeben,
wobei das Gehäuseelement (64a) eine erste Öffnung (62a) aufweist, durch die das Kältegas in eine Innenseite des Gehäuseelements (64a) eingeleitet wird, und
die erste Öffnung (62a) sich unter dem Erfassungselement (61) befindet,
**dadurch gekennzeichnet, dass**
der Kältegassensor (9) eine Leiterplatte (63) mit einer unteren Oberfläche, an der das Erfassungselement (61) befestigt ist, enthält, wobei das Gehäuseelement (64a) einen Umfang der Leiterplatte (63) bedeckt.

## Revendications

1. Climatiseur qui utilise un réfrigérant inflammable et inclut un détecteur de gaz réfrigérant (9) à l'intérieur du climatiseur, le détecteur de gaz réfrigérant (9) incluant :
un élément de détection (61) conçu pour détecter une fuite de gaz réfrigérant ; et
un élément de boîtier (62) prévu pour entourer l'élément de détection (61),
l'élément de détection (62) présentant une première ouverture (62a) à travers laquelle le gaz réfrigérant est introduit dans une partie intérieure de l'élément de boîtier (62), et
la première ouverture (62a) se situant sous l'élément de détection (61),
**caractérisé en ce que**
le détecteur de gaz réfrigérant (9) comprend une carte de circuit imprimé (63) présentant une surface inférieure à laquelle est fixé l'élément de détection (61), et l'élément de boîtier (62) est un élément cylindrique fixé à la surface inférieure de la carte de circuit imprimé (63).

2. Climatiseur selon la revendication 1, comprenant, en outre,
un élément d'entourage (64) entourant les circonférences de la carte de circuit imprimé (63) et de l'élément de boîtier (62),
une seconde ouverture (66a) étant formée dans une surface inférieure de l'élément d'entourage (64).

3. Climatiseur qui utilise un réfrigérant inflammable et inclut un détecteur de gaz réfrigérant (9) à l'intérieur du climatiseur,
le détecteur de gaz réfrigérant (9) incluant :
un élément de détection (61) conçu pour détecter une fuite de gaz réfrigérant ; et
un élément de boîtier (64a) prévu pour entourer l'élément de détection (61),
l'élément de boîtier (64a) présentant une première ouverture (62a) à travers laquelle le gaz réfrigérant est introduit dans une partie intérieure de l'élément de boîtier (64a), et
la première ouverture (62a) étant située sous l'élément de détection (61),
**caractérisé en ce que**
le détecteur de gaz réfrigérant (9) inclut une carte de circuit imprimé (63) présentant une surface inférieure à laquelle l'élément de détection (61) est fixé, l'élément de boîtier (64a) recouvrant une circonférence de la carte de circuit imprimé (63).
